# EUROPEAN PATENT SPECIFICATION

(11) **EP 2 645 841 B1**
(45) Date of publication and mention of the grant of the patent: **27.02.2019**
(21) Application number: 11844938.8
(22) Date of filing: 29.11.2011
(51) Int. Cl.: A01B 23/02, A01B 35/24

(54) **SOIL-WORKING TOOL FOR RELEASABLE FIXATION ON AN AGRICULTURAL EQUIPMENT AND AGRICULTURAL EQUIPMENT COMPRISING SUCH A SOIL-WORKING TOOL**
BODENBEARBEITUNGSWERKZEUG ZUR VORÜBERGEHENDEN BEFESTIGUNG AN EINEM LANDWIRTSCHAFTLICHEN GERÄT UND LANDWIRTSCHAFTLICHES GERÄT MIT EINEM SOLCHEN BODENBEARBEITUNGSWERKZEUG
OUTIL DE TRAVAIL DU SOL À FIXER DE FAÇON AMOVIBLE SUR UN MATÉRIEL AGRICOLE ET MATÉRIEL AGRICOLE COMPRENANT UN TEL OUTIL DE TRAVAIL DU SOL

(30) Priority: 30.11.2010 SE 1051264
(43) Date of publication of application: 09.10.2013
(73) Proprietor: Väderstad Holding AB, 590 21 Väderstad (SE)
(72) Inventor: COLLIN, Morgan, S-595 51 Mjölby (SE); STARK, Crister, S-590 21 Väderstad (SE)
(74) Representative: AWA Sweden AB
(86) International application number: PCT/SE2011/051451
(87) International publication number: WO 2012/074477

(56) References cited:
- WO-A1-2006/083216
- DE-A1- 2 913 966
- DE-A1- 2 913 966
- DE-A1- 10 210 446
- DE-U1- 9 217 506
- DE-U1- 29 905 768
- FR-A- 413 744
- FR-A1- 2 895 210
- FR-A3- 2 541 065
- GB-A- 1 333 671
- US-A- 3 010 744
- US-A- 3 141 508
- US-A- 3 532 171

## Description

### Technical Field

The present invention relates to a soil-working tool, such as a harrow tooth, a share, a scraper, a tooth supporting a levelling tool, a seed knife, a roller or compactor part, or the like, for releasable fixation or attachment to an agricultural piece of equipment or implement as well as to an agricultural implement comprising one or a plurality of such tools.

### Background Art

Agricultural implements comprising one or more beams onto which a plurality of soil-working tools are fixedly attachable in a releasable manner are previously known in the art.

For many years, tools such as harrow teeth and tools similar thereto have been attached, using various kinds of fittings, about a longitudinal beam, which during the last few decades in particular has often been constructed from square pipe. Other shapes that have been used are angel irons, U-sections, circular pipes, etc.

The fittings often have a tendency to come loose and the resulting play causes them to slide along the longitudinal beam, which means that the tool is dislocated from its optimal position and that undesirable corrosion occurs on the agricultural implement in those places where the fittings and the tool have slid on the longitudinal beam. A further drawback is that the fittings entail a cost and that the mere presence of them increases the number of parts of which an agricultural implement is made. In many cases, the fittings have been provided in the form of a clamp joint in order to improve tool retention, but the tool must not only be fixedly retained in its position on the longitudinal beam, it must also be fixedly retained at a certain angle in the horizontal plane, the angle being often, but not always, 90 degrees to the longitudinal beam. In many cases, the fittings are made of tempered steel to improve their resilience and enable better prestressing of the screw or bolt that holds the tool and the fitting together.
SE 526 848 C2 discloses an agricultural implement, in which the mounting portion of the tool bears against the outside of the beam and is fixed to the beam by means of a bolted joint, which extends through both the mounting portion and the beam.
FR 1 044 179 discloses an agricultural implement, in which the mounting portion of the tool is inserted in a through hole in the beam, and is fixed by means of a bolt that extends substantially perpendicular to a main surface of the mounting portion and engages with the mounting portion on the inside of the beam itself.
FR413744 discloses an agricultural implement according to the preamble of claim 1.
There is, however, a need for further improvements of the mounting of tools onto tool-supporting beams. There is, for instance, a need to facilitate and speed up the assembly of the agricultural implements during manufacture. There is also a need to facilitate and speed up tool replacement, which is often carried out on site using simple tools, quite often in the dark or with only limited lightning.

### Summary of the Invention

An object is therefore to provide a tool and an agricultural implement, which use a simplified mechanism for the mounting of tools onto a carrier.

The invention is defined by the appended independent claims. Embodiments of the invention will be apparent from the dependent claims and from the following description and the appended drawings.

According to the invention, an agricultural implement comprising a soil-working tool for releasable fixation to the agricultural implement is provided, comprising: a mounting portion, which is adapted to be inserted through a first opening in a first wall portion of a carrier. The mounting portion has an end portion which is adapted to engage with a recess in a second, opposite, wall portion of the carrier. The part of the end portion that is insertable in the recess has a smaller effective cross-sectional are than a part of the mounting portion that is adapted to bear against the first wall portion. The mounting portion comprises an engagement means for engagement with at least one fastening means, wherein the engagement means is located between the end portion and the part of the mounting portion that is adapted to engage with the first wall portion.

By "effective cross-sectional area" is here meant the cross-sectional area that can be used to limit the insertion of the end portion in the opening and the recess, respectively. According to one embodiment, the "effective cross-sectional area" can be a total cross-sectional area of the respective portion. However, it is conceivable to design both the end portion and the part of the mounting portion that is adapted to bear against the first wall portion such that the end portion has a greater total cross-sectional area, but can still be inserted completely through the opening until it engages with the recess.

By providing the tool with a mounting portion of varying cross-sectional area, it is possible to achieve a tool which is easy to mount, and which can be mounted in one way only, thereby facilitating the procedures for both factory and on-site mounting.

By arranging engagement means in this position, prestressing can be achieved owing to the resilience of the mounting portion itself.

Preferably, the fastening means can be in the form of, for example, screws, bolt and nut, or similar structures.

The engagement means can be adapted to engage with said fastening means in a direction substantially perpendicular to the main extent of the end portion. For instance, the engagement means can consist of holes for a screw or bolt or of an indentation or the like for engagement with a clamp or cramp iron or the like.

Alternatively, the engagement means can be located outside the carrier, for example adjacent the part of the end portion that projects beyond the second wall portion.

Said engagement means can have a through hole. Alternatively, said engagement means can have an indentation or a blind hole.

The cross-sectional area of the part of the mounting portion that is adapted to bear against the first wall portion can be substantially elongate, and a longest side of the cross-sectional area extends substantially perpendicular to the main working direction of the tool.

By "elongate" is here meant a proportion between long sides and short sides of at least 2:1, preferably at least 3:1, at least 4:1 or at least 5:1.

The agricultural implement comprises a carrier, such as a beam or a shaft, and at least one soil-working tool according to any one of the preceding claims, which is adapted to be releasably fixed to the carrier. The carrier has first and second substantially opposite wall portions. The first wall portion has a first opening, through which a mounting portion of the tool is insertable, and the second wall portion has a recess adapted to receive the end portion of the mounting portion when the latter is inserted through the first opening. The recess has a smaller effective cross-sectional area than the first opening.

Also in the case of the opening and the recess, it is possible to design these in such a manner that the recess has a greater total cross-sectional area than the opening, the opening still allowing the mounting portion to be inserted completely therethrough until it engages with the recess.

It will be appreciated that the shapes of, on the one hand, the recess and the end portion, and on the other hand the mounting portion and the opening can be such that the end portion is completely insertable through the opening, and that the end portion engages with the recess in such a manner that further insertion is prevented. Both the opening and the recess can be designed to prevent the mounting portion from moving in any direction perpendicular to the longitudinal direction of the mounting portion.

By forming recesses with these shapes, it is possible to predetermine the exact positions of the tools on the carrier, which reduces the risk of factory defects or incorrect assembly when replacing a tool. In addition, improved angular fixation of the tool relative to the carrier is achieved.

Furthermore, it is advantageous to remove as little material as possible from the second wall portion when forming the recess.

Using laser cutting, for example, it is possible to rapidly and easily cut holes and recesses of any chosen shape in a beam.

The agricultural implement can comprise at least one fastening means, which is adapted to engage with the mounting portion of the tool in a direction substantially perpendicular to the main extent of the mounting portion.

The carrier has a third wall portion, which extends between said first and second wall portions. The third wall portion can have a second opening, through which a fastening means is insertable for engagement with the mounting portion, when the mounting portion is inserted through the first opening and its end portion is received in the recess.

The carrier can have a fourth wall portion, which extends between said first and second wall portions. The fourth wall portion can have a third opening, through which said fastening means is insertable for engagement with the mounting portion, when the mounting portion is inserted through the first opening and its end portion is received in the recess.

The third opening can be adapted to form-fittingly lock said fastening means in at least one dimension relative to the carrier.

The first opening and the recess can be closer to the fourth wall portion than to the third wall portion.

The first opening and the recess can be located so close to the fourth wall portion that form-fitting locking of said fastening means relative to the carrier and pulling engagement with the mounting portion occur simultaneously.

By "pulling engagement" is here meant that there is a tensile stress in the fastening means, i.e. that the fastening means pulls the mounting portion in the direction towards the third surface portion.

The first opening can be substantially elongate, and a longest side of the opening can extend substantially perpendicular to the main working direction of the tool.

### Brief Description of the Drawings

Fig. 1 is schematic perspective view of an agricultural implement 100, which is intended to be towed by a tractor and which comprises a plurality of harrow teeth 1, 1' arranged on a carrier in the form of square beams 2.
Fig. 2 is a schematic perspective view of a part of the agricultural implement with levelling tools 1, 1', according to two different embodiments, when mounted on a square beam 2.
Fig. 3 is a schematic perspective view of a tool 1 in the form of a levelling tool according to a first embodiment.
Fig. 4 is a schematic perspective view of a tool 1' in the form of a levelling tool according to a second embodiment.
Fig. 5a is a schematic perspective view in a vertical plane of a tool 1" in the form of a levelling tool according to a third embodiment.
Fig. 5b is a schematic sectional view in a horizontal plane A-A of the tool 1" according to the third embodiment.
Figs 6a-6d show tools 1"', 1^{IV} according to a non-claimed embodiment.

### Description of Embodiments

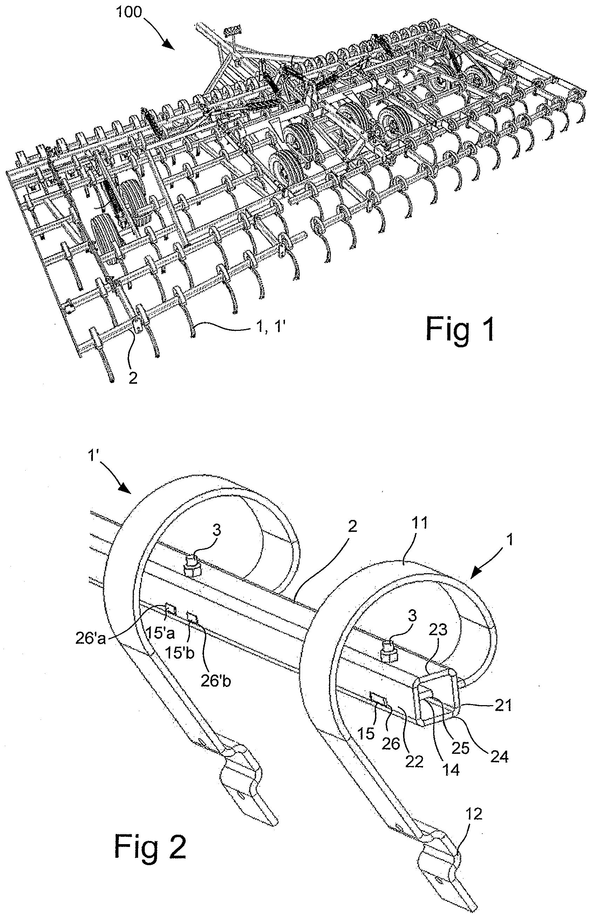

Fig. 1 shows an agricultural implement 100 in the form of a harrow, on which a large number of tools 1, 1', here in the form of harrow teeth, are arranged. Each tool 1, 1' is fixed to a substantially transverse (relative to the intended direction of travel of the agricultural implement) carrier in the form of a beam 2.

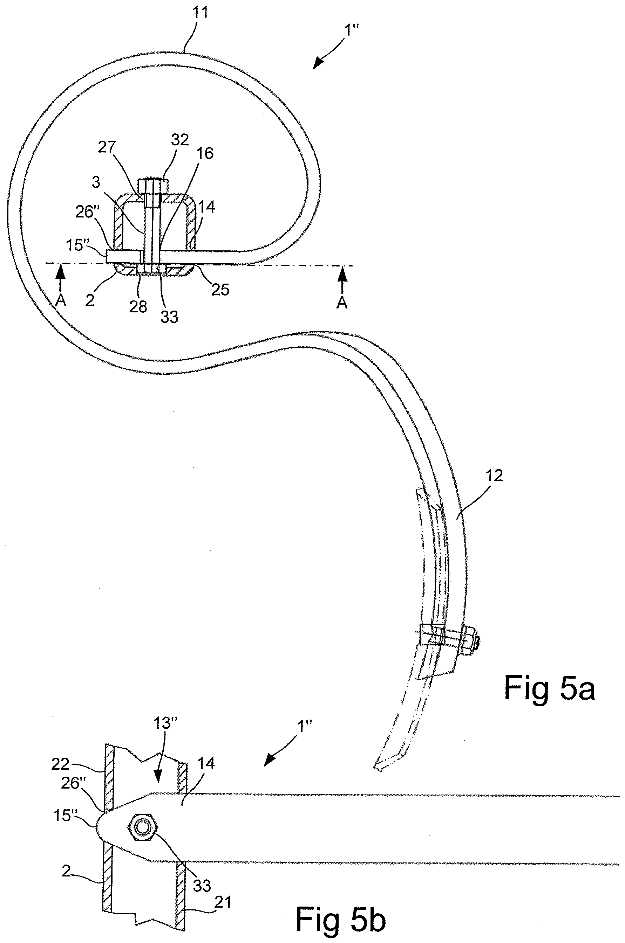

A tool 1, 1', 1" comprises a mounting part 13, which is adapted to be mounted onto a carrier 2, and a working part 12, which can be adapted to directly or via, for instance, a replaceable harrow tooth tip (Fig. 5a), a roller or a harrow disc, engage with the soil that is to be cultivated. The mounting part 13 and the working part 12 can be joined together by inter alia a spring portion 11.

Fig. 2 shows first 1 and second 1' tools, which via associated engagement portions are fixed to a beam 2. The tools in Fig. 2 are designed according to a first and a second embodiment, respectively, and so differ with respect to the design of their respective engagement portion.

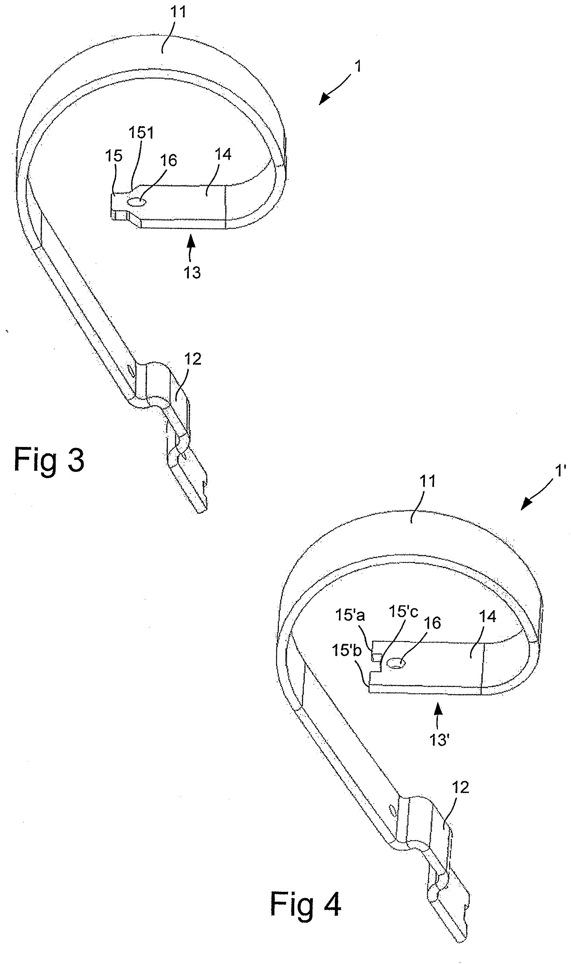

The tool 1 according to the first embodiment (see also Fig. 3) has an end portion 15, whose cross-section is substantially constant and considerably narrower (in the horizontal direction) than the cross-section of the other part of the mounting portion 13. Between the end portion 15 and the other part of the mounting portion 13 is a portion 151 that tapers towards the end portion. The part of the end portion 15 that has a constant and narrower cross-section can be of a length that substantially corresponds to a depth of the recess 26 with which the end portion 15 is to engage.

The tool 1' according to the second embodiment has an end portion 15'a, 15'b, whose cross-section comprises two side portions 15'a, 15'b, which are separated by a cut-out 15'c extending in the longitudinal direction of the mounting portion. Thus, the longitudinal side portions of the whole mounting portion 13' are continuous. The cut-out 15'c can be of a length that substantially corresponds to a depth of the recess 26'a, 26'b with which the end portion 15'a, 15'b is to engage. The tool 1' according to the second embodiment can enable improved angular fixation as compared with the tool 1 according to the first embodiment.

Figs 5a and 5b show a third embodiment of a tool 1", where the end portion 15" is continuously tapering. The end portion 15" can be considerably longer than the depth of the recess 26" with which the end portion 15" is to engage.

All the mounting portions shown have a through hole 16, through which a screw or bolt 3 is insertable in such a manner that the bolt's head 33, or a nut 32 arranged on the bolt, will engage with a surface portion surrounding the hole 16. It will be appreciated that the hole 16 can be replaced by an equivalent structure, such as a recess or notch or the like.

Typically, the carrier 2 can be a beam. Generally, metal beams are used, preferably made of steel. The drawings show beams made of square pipe, but the invention can also be used in conjunction with carriers constructed from pipes of a different cross-section, such as circular or elliptic, or carriers made from, for example, a U-beam or an I-beam.

In the examples shown, the carrier 2 is a beam formed from square pipe, which has first 21, second 22, third 23 and fourth 24 wall portions, which form pairs that are substantially at right angles to each other. The first and second wall portions 21, 22 and the third and fourth wall portions 23, 24, respectively, are arranged substantially in opposite pairs.

The first wall portion 21 has an opening 25, through which the mounting portion 13 of the tool is insertable. The shape of the opening 25 can substantially correspond to the greatest cross-section of the mounting portion 13.

The second wall portion 22 has a recess 26, 26'a, 26'b, 26", which can be, but is not necessarily, a through-extending recess. The recess 26, 26'a, 26'b, 26" has a shape that substantially corresponds to the shape of the end portion 15, 15'a, 15'b, 15" of the mounting portion. Thus, the end portion is completely or partly insertable in the recess 26, 26'a, 26'b, 26" in a manner that permits satisfactory transmission of a force acting perpendicularly to the end portion 15, 15'a, 15'b, 15".

A recess 26 shaped to conform to the first embodiment of the tool 1 can have a shape that substantially corresponds to the narrower cross-section 15 of the end portion.

A recess shaped to conform to the second embodiment of the tool 1' can comprise two recesses 26'a, 26'b, which each have a shape that substantially corresponds to the cross-section 15'a, 15'b of the respective side portions.

A recess 26" shaped to conform to the third embodiment of the tool 1" can have a shape that substantially corresponds to the cross-section of the tapering end portion 15" when the latter is in a desired position. Possibly, the substantially vertical walls of the recess 26" can be angled relative to the second surface portion 22, such that they substantially meet the walls of the tapering end portion 15".

The third wall portion 23 extends between the first and second wall portions 21, 22 and has a second opening 27, in which a fastening element 3 is insertable. The opening 27 can be threaded (not shown), so that a fastening element in the form of a bolt can be inserted through the hole in the mounting portion and engage with the threads of the second opening 27. Alternatively, the second opening 27 can be without threads, in which case the bolt 3 engages instead with a nut 32 on the opposite side of the third wall portion 23.

Furthermore, a fourth wall portion 24, which is located opposite the third wall portion 23, can extend between the first and second wall portions 21, 22. This fourth wall portion 24 can have a third opening 28, through which the fastening element 3 is insertable. The third opening 28 can be designed so as to form-fittingly lock the fastening means in at least one dimension, thereby preventing a rotary motion about a longitudinal axis of the fastening element 3. For example, the third opening 28 can have a substantially hexagonal cross-section, such that its size and shape match a bolt head 33 of a bolt 3 that is to be used as fastening element.

The first opening 25 and the recess 26, 26'a, 26'b, 26" can be arranged closer to the fourth wall portion 24 than to the third wall portion 23. According to one embodiment, the distance between, on the one hand, the fourth wall portion 24 and on the other hand the first opening and the recess, respectively, can be smaller than the axial thickness of the bolt head 33, or a corresponding nut (not shown).

It will be appreciated that the bolt 3 can be oriented either way, which means that the opening 28 can instead be adapted to receive a nut, and the distance between, on the one hand, the fourth wall portion 27 and on the other hand the first opening 25 and the recess 26, 26'a, 26'b, 26", respectively, can be smaller than the axial thickness of the nut.

In this way, form-fitting locking of the fastening element 3 is obtained while at the same time said fastening element engages with the mounting portion 13, 13', 13".

In the configuration shown, an axial tensile force generated in the fastening element will act substantially perpendicularly to the mounting portion 13, 13', 13". Thus, through the interaction between the fastening element and the resilience of the mounting portion 13, 13', 13" and/or the third surface portion 23 sufficient prestressing of the mounting portion 13, 13', 13" relative to the carrier 2 can be achieved.

Further, it will be appreciated that in the configurations shown, a counter clockwise torque moment imposed on the mounting portion (which occurs, for example, when hitting a rock) will act in the area of the upper edge of the first opening 25 and will be counteracted by the fastening element 3, which absorbs a large part of the torque moment in the form of a tensile force. This reduces the stress both on the end portion 15, 15'a, 15'b, 15" and on the recess 26, 26'a, 26'b, 26 of the second surface portion 22. Moreover, the above embodiments ensure a constant direction of load on the edges of both the opening 25 and the recess 26, 26'a, 26'b, 26" as well as on the respective part of the mounting portion 13, 13' 13".

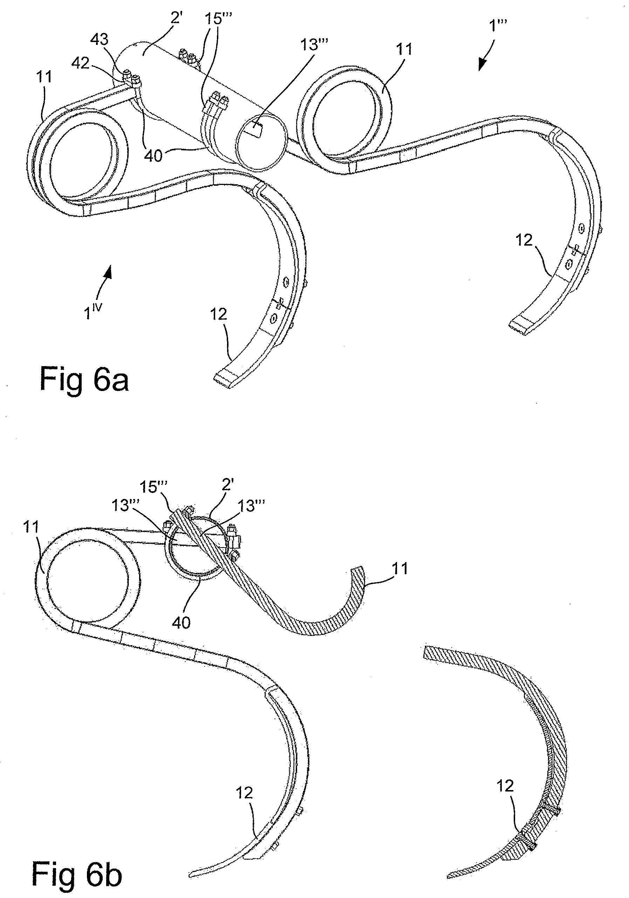

Figs 6a-6d show part of a carrier 2', and two tools 1"', 1^{IV} according to a non-claimed embodiment which are releasably fixed to the carrier 2', said fourth embodiment resembling that which is disclosed in SE-532 989 C2. Here the tools 1"', 1^{IV} are fixed relative to the carrier 2' by means of a fastening device 40 that includes a clamp 41, which envelops the ends of the mounting portion 13'", the open ends of the clamp 41 being received in respective holes in a sheet-metal strip 42 and being fixed in position relative to the sheet-metal strip by means of nuts 43, which when tightened forces the sheet-metal strip against the mounting portion 13'". The carrier 2' is here in the form of a hollow beam of substantially circular cross-section. By the recess 26' being through-extending and the end portion 15'" projecting beyond the recess, the clamp is able to engage with the end portion 15'" as well as with a portion of the mounting portion 13'" that is located substantially on the opposite side of the carrier 2'.

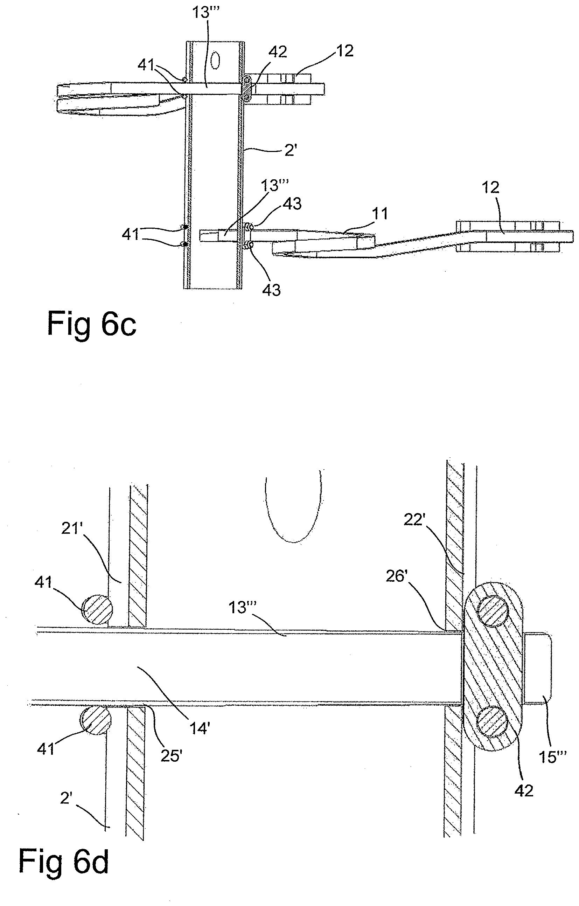

The carrier can have a first wall portion 21' (Fig. 6d), which has an opening 25', through which the mounting portion 13'" is insertable. The carrier 2' can further have a second wall portion 22', which has a recess 26', through which the end portion 15" of the mounting portion 13'" is insertable. The recess 26' can have a smaller effective cross-sectional area than the opening 25'.

The mounting portion 13'" can be provided with indentations on the respective sides of the carrier 2' for the purpose of receiving the clamps or parts thereof. The indentations can have the shape of substantially transverse grooves.

Alternatively, such an indentation can occur on one side of the carrier 2', for example on the end portion 15"'.

Fig. 6a shows a first tool 1"', which extends substantially backwards from the carrier 2', and a second tool1^{IV}, which extends substantially forwards from the carrier 2'. The tools are so designed that the mounting portion 13'" has an end portion 15'" whose effective cross-sectional area is smaller than an effective cross-sectional area of a contact portion 14'. Fig. 6b is a cross-sectional view of the tools in Fig. 6a, taken in a vertical plane, which is substantially parallel to the direction of travel of the agricultural implement. As a consequence of the choice of sectional plane, parts of the first tool 1'" is missing in the figure.

Fig. 6c is a cross-sectional view of the tools in Fig. 6a, taken in a horizontal plane.

Fig. 6d shows a detail of a cross-sectional view of a tool in Fig. 6a, taken in a plane that is parallel to the mounting portion 13'" of the second tool 1^{IV}. As shown, the mounting portion 13'" is continuously tapering towards the end portion 15'". Alternatively, the mounting portion can be gradually tapering.

It will be appreciated that also other elements of an agricultural implement can be mounted using interacting mounting portions and openings/recesses according to that which has been described above. For example, hose straps, struts or other machine parts can be mounted in a similar manner.

Thus, a machine element is provided, such as a hose strap or a strut, for releasable fixation to an agricultural implement, comprising: a mounting portion, which is adapted to be inserted through a first opening in a first wall portion of a carrier. The mounting portion has an end portion which is adapted to engage with a recess in a second, substantially opposite, wall portion of the carrier. The part of the end portion that is insertable in the recess has a smaller effective cross-sectional area than a part of the mounting portion that is adapted to bear against the first wall portion.

Furthermore, an agricultural implement is provided comprising a carrier, such as a beam or a shaft, and at least one machine element according to that which has been described above, which is adapted to be releasably fixed to the carrier. The carrier has first and second substantially opposite wall portions. The first wall portion has a first opening, through which a mounting portion of the tool is insertable. The second wall portion has a recess, adapted to receive the end portion of the mounting portion when the latter is inserted through the first opening. The recess has a smaller effective cross-sectional area than the first opening.

The mounting portions shown herein are symmetrical in a plane including the respective mounting portions. It will be appreciated that it may be advantageous to give each mounting portion an asymmetrical shape, for instance in order to reduce the risk of incorrect positioning of the tool.

## Claims

1. An agricultural implement (100), comprising:
a carrier (2, 2'), such as a beam or a shaft, having first and second substantially opposite wall portions (21, 21', 22, 22'); and
a soil-working tool (1, 1', 1") for releasable fixation to the agricultural implement (100), comprising:
a mounting portion (13, 13', 13"), which is insertable through a first opening (25) in a first wall portion (21) of the carrier (2),
the mounting portion (13, 13', 13") having an end portion (15, 15'a, 15'b, 15"), which is adapted to engage with a recess (26, 26'a, 26'b, 26") in a second, substantially opposite, wall portion (22) of the carrier (2, 2') when the mounting portion (13, 13', 13") is inserted through the first opening (25),
wherein the part of the end portion (15, 15'a, 15'b, 15", 15'") that is insertable in the recess (26, 26'a, 26'b, 26") has a smaller effective cross-sectional area than a part (14) of the mounting portion (13, 13', 13") that is adapted to bear against the first wall portion (21),
wherein the recess (26, 26'a, 26'b, 26") has a smaller effective cross-sectional area than the first opening (25),
wherein
the mounting portion (13, 13', 13") comprises an engagement means (16) for engagement with at least one fastening element (3), and
wherein said engagement means (16) is located between the end portion (15, 15'a, 15'b, 15") and the part (14) of the mounting portion that is adapted to engage with the first wall portion (21),
**characterised in that**
the carrier (2) has a third wall portion (23), which extends between said first and said second wall portions (21, 22), and
the third wall portion (23) has a second opening (27), through which the fastening element (3) is insertable for engagement with the mounting portion (13, 13', 13"), when the mounting portion is inserted through the first opening (25) and its end portion (15, 15'a, 15'b, 15") is received in the recess (26, 26'a, 26'b, 26"),
whereby when an axial tensile force is generated in the fastening element (3) substantially perpendicularly to the mounting portion (13, 13', 13"), the interaction between the fastening element (3) and the resilience of the mounting portion (13, 13', 13") and/or of the third wall portion (23) achieves prestressing of the mounting portion (13, 13', 13") relative to the carrier (2).

2. An agricultural implement according to claim 1, wherein said engagement means is adapted to engage with said fastening means (3) in a direction substantially perpendicular to the main extent of the mounting portion.

3. An agricultural implement according to any one of claims 1-2, wherein said engagement means (16) has a through hole.

4. An agricultural implement according to any one of claims 1-2, wherein said engagement means is located outside the carrier, preferably adjacent a part of the end portion that is arranged to project beyond the second wall portion (22, 22').

5. An agricultural implement according to claim 4, wherein said engagement means has an indentation or a blind hole.

6. An agricultural implement according to any one of the preceding claims, wherein the cross-sectional area of the part (14, 14') of the mounting portion (13, 13', 13") that is adapted to bear against the first wall portion (21, 21') is substantially elongate, and a longest side of the cross-sectional area extends substantially perpendicular to the main working direction of the tool.

7. An agricultural implement according to any one of the preceding claims, wherein the carrier has a fourth wall portion (24), which extends between said first and said second wall portions (21, 22), and
wherein the fourth wall portion (24) has a third opening (28), through which said fastening means (3) in insertable for engagement with the mounting portion (13, 13', 13"), when the mounting portion is inserted through the first opening (25) and its end portion (15, 15'a, 15'b, 15") is received in the recess (26, 26'a, 26'b, 26").

8. An agricultural implement according to claim 7, wherein the third opening (28) is adapted to form-fittingly lock said fastening means (3) in at least one dimension relative to the carrier (2).

9. An agricultural implement according to claim 7 or 8, wherein said first opening (25) and said recess (26, 26'a, 26'b, 26") are closer to the fourth wall portion (24) than to the third wall portion (23).

10. An agricultural implement according to claim 7 or 8, wherein the first opening (25) and the recess (26, 26'a, 26'b, 26") are located so close to the fourth wall portion (24) that form-fitting locking of said fastening means relative to the carrier (2) and pulling engagement with the mounting portion (13, 13', 13") occur simultaneously.

11. An agricultural implement according to any one of the preceding claims , wherein the first opening (25, 25') is substantially elongate, and a longest side of the opening extends substantially perpendicularly to the main working direction of the tool.

## Patentansprüche

1. Landwirtschaftliches Gerät (100), umfassend:
einen Träger (2, 2'), wie etwa einen Balken oder einen Schaft, der einen ersten und zweiten im Wesentlichen gegenüberliegenden Wandabschnitt (21, 21', 22, 22') hat,
ein bodenbearbeitendes Werkzeug (1, 1', 1") zur lösbaren Fixierung an dem landwirtschaftlichen Gerät (100), umfassend:
einen Montageabschnitt (13, 13', 13"), der durch eine erste Öffnung (25) in einem ersten Wandabschnitt (21) des Trägers (2) einsetzbar ist,
wobei der Montageabschnitt (13, 13', 13") einen Endabschnitt (15, 15'a, 15'b, 15") hat, der ausgelegt ist, um mit einer Vertiefung (26, 26'a, 26'b, 26") in einem zweiten im Wesentlichen gegenüberliegenden Wandabschnitt (22) des Trägers (2, 2') in Eingriff zu kommen, wenn der Montageabschnitt (13, 13', 13") durch die erste Öffnung (25) eingesetzt ist,
wobei der Teil des Endabschnitts (15, 15'a, 15'b, 15", 15'"), der in die Vertiefung (26, 26'a, 26'b, 26") einsetzbar ist, einen kleineren Wirkquerschnittsbereich hat als ein Teil (14) des Montageabschnitts (13, 13', 13"), der ausgelegt ist, um an dem ersten Wandabschnitt (21) anzuliegen,
wobei die Vertiefung (26, 26'a, 26'b, 26") einen kleineren Wirkquerschnittsbereich hat als die erste Öffnung (25),
wobei
der Montageabschnitt (13, 13', 13") ein Eingriffsmittel (16) zum Eingriff mit mindestens einem Befestigungselement (3) umfasst und
wobei sich das Eingriffsmittel (16) zwischen dem Endabschnitt (15, 15'a, 15'b, 15") und dem Teil (14) des Montageabschnitts befindet, der ausgelegt ist, um mit dem ersten Wandabschnitt (21) in Eingriff zu kommen,
**dadurch gekennzeichnet, dass**
der Träger (2) einen dritten Wandabschnitt (23) hat, der sich zwischen dem ersten und dem zweiten Wandabschnitt (21, 22) erstreckt, und
der dritte Wandabschnitt (23) eine zweite Öffnung (27) hat, durch die das Befestigungselement (3) zum Eingriff mit dem Montageabschnitt (13, 13', 13") einsetzbar ist, wenn der Montageabschnitt durch die erste Öffnung (25) eingesetzt ist und sein Endabschnitt (15, 15'a, 15'b, 15") in der Vertiefung (26, 26'a, 26'b, 26") aufgenommen ist,
wodurch, wenn eine axiale Zugkraft in dem Befestigungselement (3) im Wesentlichen senkrecht zu dem Montageabschnitt (13, 13', 13") erzeugt wird, die Wechselwirkung zwischen dem Befestigungselement (3) und der Elastizität des Montageabschnitts (13, 13', 13") und/oder des dritten Wandabschnitts (23) ein Vorspannen des Montageabschnitts (13, 13', 13") relativ zu dem Träger (2) erzielt.

2. Landwirtschaftliches Gerät nach Anspruch 1, wobei das Eingriffsmittel ausgelegt ist, um mit dem Befestigungsmittel (3) in einer Richtung im Wesentlichen senkrecht zu der Haupterstreckung des Montageabschnitts in Eingriff zu kommen.

3. Landwirtschaftliches Gerät nach einem der Ansprüche 1-2, wobei das Eingriffsmittel (16) ein Durchgangsloch hat.

4. Landwirtschaftliches Gerät nach einem der Ansprüche 1-2, wobei sich das Eingriffsmittel außerhalb des Trägers befindet, vorzugsweise benachbart zu einem Teil des Endabschnitts, der angeordnet ist, um über den zweiten Wandabschnitt (22, 22') hinaus vorzustehen.

5. Landwirtschaftliches Gerät nach Anspruch 4, wobei das Eingriffsmittel eine Einbuchtung oder ein Sackloch hat.

6. Landwirtschaftliches Gerät nach einem der vorhergehenden Ansprüche, wobei der Querschnittsbereich des Teils (14, 14') des Montageabschnitts (13, 13', 13"), der ausgelegt ist, um an dem ersten Wandabschnitt (21, 21') anzuliegen, im Wesentlichen länglich ist und eine längste Seite des Querschnittsbereichs im Wesentlichen senkrecht zu der Hauptarbeitsrichtung des Werkzeugs ist.

7. Landwirtschaftliches Gerät nach einem der vorhergehenden Ansprüche, wobei der Träger einen vierten Wandabschnitt (24) hat, der sich zwischen dem ersten und dem zweiten Wandabschnitt (21, 22) erstreckt, und wobei der vierte Wandabschnitt (24) eine dritte Öffnung (28) hat, durch die das Befestigungsmittel (3) zum Eingriff mit dem Montageabschnitt (13, 13', 13") einsetzbar ist, wenn der Montageabschnitt durch die erste Öffnung (25) eingesetzt ist und sein Endabschnitt (15, 15'a, 15'b, 15") in der Vertiefung (26, 26'a, 26'b, 26") aufgenommen ist.

8. Landwirtschaftliches Gerät nach Anspruch 7, wobei die dritte Öffnung (28) ausgelegt ist, um das Befestigungsmittel (3) in mindestens einer Abmessung relativ zu dem Träger (2) formschlüssig zu verriegeln.

9. Landwirtschaftliches Gerät nach Anspruch 7 oder 8, wobei die erste Öffnung (25) und die Vertiefung (26, 26'a, 26'b, 26") näher zu dem vierten Wandabschnitt (24) sind als zu dem dritten Wandabschnitt (23).

10. Landwirtschaftliches Gerät nach Anspruch 7 oder 8, wobei sich die erste Öffnung (25) und die Vertiefung (26, 26'a, 26'b, 26") derart nah zu dem vierten Wandabschnitt (24) befinden, dass ein formschlüssiges Verriegeln des Befestigungsmittels relativ zu dem Träger (2) und ein ziehender Eingriff mit dem Montageabschnitt (13, 13', 13") gleichzeitig stattfinden.

11. Landwirtschaftliches Gerät nach einem der vorhergehenden Ansprüche, wobei die erste Öffnung (25, 25') im Wesentlichen länglich ist und sich eine längste Seite der Öffnung im Wesentlichen senkrecht zu der Hauptarbeitsrichtung des Werkzeugs erstreckt.

## Revendications

1. Instrument agricole (100), comprenant :
un support (2, 2'), tel qu'une poutre ou un arbre, comportant des première et seconde sections de paroi sensiblement opposées (21, 21', 22, 22') ; et
un outil de travail du sol (1, 1', 1") destiné à être fixé de manière dissociable sur l'instrument agricole (100), comprenant :
une section de montage (13,13', 13") qui est insérable à travers une première ouverture (25) dans une première section de paroi (21) du support (2),
la section de montage (13,13', 13") comportant une section terminale (15, 15'a, 15'b, 15") qui est apte à s'engager dans un retrait (26, 26'a, 26'b, 26") dans une deuxième section de paroi sensiblement opposée (22) du support (2, 2') lorsque la section de montage (13,13', 13") est insérée à travers la première ouverture (25),
la partie de la section terminale (15, 15'a, 15'b, 15") qui est insérable dans le retrait (26, 26'a, 26'b, 26") ayant une zone de section transversale effective plus réduite qu'une partie (14) de la section de montage (13, 13', 13") qui est apte à porter contre la première section de paroi (21),
le retrait (26, 26'a, 26'b, 26") ayant une zone de section transversale effective plus réduite que la première ouverture (25),
dans lequel
la section de montage (13,13', 13") comprenant un moyen d'engagement (16) destiné à s'engager dans au moins un élément de fixation (3), et
ledit moyen d'engagement (16) se trouvant entre la section terminale (15,15'a, 15'b, 15") et la partie (14) de la section de montage qui est apte à s'engager dans la première section de paroi (21),
**caractérisé en ce que**
le support (2) comporte une troisième section de paroi (23) qui s'étend entre ladite première et ladite seconde sections de paroi (21, 22), et
la troisième section de paroi (23) ayant une deuxième ouverture (27) à travers laquelle l'élément de fixation (3) est insérable pour engagement dans la section de montage (13, 13', 13") lorsque la section de montage est insérée à travers la première ouverture (25) et sa section terminale (15, 15'a, 15'b, 15") est reçue dans le retrait (26, 26'a, 26'b, 26"),
sachant que, lorsqu'une force de traction axiale est générée dans l'élément de fixation (3) substantiellement à la perpendiculaire de la section de montage (13, 13', 13"), l'interaction entre l'élément de fixation (3) et la résilience de la section de montage (13, 13', 13") et/ou de la troisième section de paroi (23) assure une précontrainte de la section de montage (13, 13', 13") par rapport au support (2).

2. Instrument agricole selon la revendication 1, dans lequel ledit moyen d'engagement est apte à s'engager dans ledit moyen de fixation (3) dans un sens substantiellement perpendiculaire à l'extension principale de la section de montage.

3. Instrument agricole selon l'une quelconque des revendications 1 à 2, dans lequel ledit moyen d'engagement (16) comporte un trou traversant.

4. Instrument agricole selon l'une quelconque des revendications 1 à 2, dans lequel ledit moyen d'engagement se trouve à l'extérieur du support, de préférence adjacent à une partie de la section terminale qui est conçue pour être en saillie au-delà de la deuxième section de paroi (22, 22').

5. Instrument agricole selon la revendication 4, dans lequel ledit moyen d'engagement comporte une indentation ou un trou borgne.

6. Instrument agricole selon l'une quelconque des revendications précédentes, dans lequel la zone de section transversale de la partie (14, 14') de la section de montage (13, 13', 13") qui est apte à porter contre la première section de paroi (21, 21') est substantiellement allongée, et un côté le plus long de la zone de section transversale s'étend substantiellement à la perpendiculaire du sens de travail principal de l'outil.

7. Instrument agricole selon l'une quelconque des revendications précédentes, dans lequel le support comporte une quatrième section de paroi (24) qui s'étend entre ladite première et ladite deuxième sections de paroi (21, 22), et
la quatrième section de paroi (24) comporte une troisième ouverture (28) à travers laquelle ledit moyen de fixation (3) est insérable pour engagement dans la section de montage (13, 13', 13") lorsque la section de montage est insérée à travers la première ouverture (25) et sa section terminale (15, 15'a, 15'b, 15") est reçue dans le retrait (26, 26'a, 26'b, 26").

8. Instrument agricole selon la revendication 7, dans lequel la troisième ouverture (28) est apte à verrouiller par ajustement de forme ledit moyen de fixation (3) dans au moins une dimension par rapport au support (2).

9. Instrument agricole selon la revendication 7 ou 8, dans lequel ladite première ouverture (25) et ledit retrait (26, 26'a, 26'b, 26") sont plus proches de la quatrième section de paroi (24) que de la troisième section de paroi (23).

10. Instrument agricole selon la revendication 7 ou 8, dans lequel la première ouverture (25) et le retrait (26, 26'a, 26'b, 26") sont situés assez près de la quatrième section de paroi (24) qui établit un verrouillage par ajustement dudit moyen de fixation par rapport au support (2) et un engagement en traction avec la section de montage (13, 13', 13") se produit simultanément.

11. Instrument agricole selon l'une quelconque des revendications précédentes, dans lequel la première ouverture (25, 25') est sensiblement allongée, et un côté le plus long de l'ouverture s'étend substantiellement à la perpendiculaire du sens de travail principal de l'outil.
